(19) **Europäisches Patentamt / European Patent Office / Office européen des brevets**

(11) **EP 2 376 968 B1**

(12) # FASCICULE DE BREVET EUROPEEN

(45) Date de publication et mention de la délivrance du brevet:
**16.01.2013 Bulletin 2013/03**

(21) Numéro de dépôt: **09764867.9**

(22) Date de dépôt: **09.12.2009**

(51) Int Cl.:
***G02B 27/01*** *(2006.01)*   ***G03B 21/14*** *(2006.01)*
***G02B 27/00*** *(2006.01)*

(86) Numéro de dépôt international:
**PCT/EP2009/066758**

(87) Numéro de publication internationale:
**WO 2010/066804 (17.06.2010 Gazette 2010/24)**

(54) **DISPOSITIF DIFFRACTIF D'AFFICHAGE TÊTE HAUTE MUNI D'UN DISPOSITIF DE RÉGLAGE DE LA POSITION DE L'IMAGE VIRTUELLE.**

MIT EINER EINRICHTUNG ZUR JUSTIERUNG DER POSITION DES VIRTUELLEN BILDES AUSGESTATTETE BEUGENDE HEAD-UP-ANZEIGEANORDNUNG

DIFFRACTIVE HEAD-UP DISPLAY DEVICE PROVIDED WITH A DEVICE FOR ADJUSTING THE POSITION OF THE VIRTUAL IMAGE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **09.12.2008 EP 08171139**
**09.12.2008 EP 08171134**

(43) Date de publication de la demande:
**19.10.2011 Bulletin 2011/42**

(73) Titulaires:
 • **Delphi Technologies, Inc.**
  **Troy, MI 48007 (US)**
 • **Université de Strasbourg**
  **67081 Strasbourg Cedex (FR)**

(72) Inventeurs:
 • **MOUSSA, Hassan**
  **F-67400 Illkirch (FR)**

 • **EL HAFIDI, Idriss**
  **F-67100 Strasbourg (FR)**
 • **TUPINIER, Laurent**
  **F-67116 Reichstett (FR)**

(74) Mandataire: **Robert, Vincent et al**
  **Delphi France SAS**
  **Bât. le Raspail - ZAC Paris Nord 2**
  **22, avenue des Nations**
  **CS 65059 Villepinte**
  **95972 Roissy CDG Cedex (FR)**

(56) Documents cités:
  **EP-A- 0 880 287        EP-A- 1 862 841**
  **DE-A1-102006 017 666    FR-A- 2 900 475**
  **US-A1- 2005 259 034**

**Description**

DOMAINE TECHNIQUE

La présente invention concerne un dispositif diffractif d'affichage tête haute muni d'un dispositif de réglage de position de l'image virtuelle.

ARRIERE-PLAN TECHNOLOGIQUE DE L'INVENTION

Dans la fonction Affichage Tête Haute, l'image virtuelle est placée dans le champ de vision du conducteur en tenant compte de son ellipse des yeux et de la scène réelle. Toutefois, il est nécessaire de pouvoir régler la position de l'image virtuelle autour de sa position nominale pour mieux l'adapter à la hauteur du siège du conducteur, à sa taille et à l'architecture du véhicule.

Dans les dispositifs d'affichage tête haute basés sur l'utilisation d'une série de miroirs, le réglage de la position de l'image virtuelle se fait par rotation d'un (ou de plusieurs) miroirs autour d'un axe, comme c'est le cas dans le document DE 102 2006 017666. Cette solution n'est pas applicable dans le cas d'un dispositif diffractif d'affichage tête haute dépourvu de miroirs et utilisant des composant diffractifs, en particulier lorsque le combineur diffractif a été fabriqué à partir d'un procédé d'enregistrement des éléments diffractifs qui fixe par conception l'angle de vision vers le bas de l'image virtuelle produite par le dispositif d'affichage pour un angle d'illumination du combineur déterminé. Le document EP 0 880 287 décrit un projecteur pourvu d'un système d'ajustement de la position de l'image.

Le document US 2005/0259034 décrit un dispositif permettant d'ajuster la position de l'image dans un afficheur tête haute.

RESUME DE L'INVENTION

La présente invention vise à proposer un dispositif diffractif d'affichage tête haute muni d'un dispositif de réglage de la position de l'image virtuelle qui puisse fonctionner sans avoir à déplacer ou faire pivoter un miroir.

Dans ce but, la présente invention propose un dispositif d'affichage tête haute comportant une unité de projection qui produit un faisceau lumineux dirigé vers un combineur diffractif prévu pour former une image virtuelle dans le champ de vision d'un observateur, l'unité de projection comportant une source lumineuse qui produit un faisceau lumineux de projection dirigé vers un afficheur destiné à former une image source transmise vers le combineur diffractif, caractérisé en ce que l'unité de projection comporte un masque de projection qui est agencé après l'afficheur et qui est muni d'une fenêtre de projection dont l'aire correspond globalement à l'aire d'affichage de l'afficheur, en ce que le faisceau lumineux éclaire de manière uniforme, au niveau de l'afficheur, une aire plus importante que l'aire d'affichage, et en ce que l'afficheur et le masque sont mobiles en translation suivant au moins une direction globalement orthogonale à l'axe du faisceau lumineux de projection, de manière que le réglage de la position de l'image virtuelle dans le champ de vision de l'observateur, par exemple le conducteur d'un véhicule, soit obtenu par translation de l'afficheur et du masque.

La solution de l'invention est basée sur un mouvement de translation de l'afficheur et sur une fenêtre de projection spécifique.

Selon d'autres caractéristiques de l'invention :

-    le combineur diffractif est réalisé sous la forme d'une plaque transparente munie d'une série d'éléments optiques diffractifs disposés en surface sur une seule couche et dans lequel l'angle de vision vers le bas de l'image virtuelle est fixé par conception lors de la fabrication du combineur diffractif pour un angle d'illumination déterminé ;

-    le combineur diffractif est réalisé par injection ou embossage à partir d'un moule, ledit moule étant obtenu à partir de l'enregistrement d'une structure diffractive en relief comportant des franges d'interférence elles-mêmes obtenues par insolation d'une couche photorésistante au moyen de deux faisceaux lumineux interférents ;

-    le masque est fixé sur la face de sortie de l'afficheur ;

-    l'afficheur est un écran à cristaux liquides ;

-    le dispositif diffractif d'affichage comporte un dispositif de commande qui contrôle la position de l'afficheur et du masque.

BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:

-    la figure 1 est vue schématique qui représente l'habitacle d'un véhicule automobile équipé d'un dispositif diffractif d'affichage tête haute conforme aux enseignements de l'invention ;

- la figure 2 est une vue en coupe axiale qui représente schématiquement l'unité de projection et le combineur diffractif équipant le dispositif diffractif d'affichage de la figure 1 ;
- la figure 3 est une vue en coupe axiale qui représente schématiquement l'unité de projection de la figure 1 équipée d'un afficheur mobile en translation conformément à l'invention ;
- la figure 4 est un schéma montrant l'aire d'illumination et l'aire d'affichage de l'unité de projection de la figure 1 ;
- la figure 5 est une vue similaire à celle de la figure 2 qui montre la direction de translation de l'afficheur de la figure 3 ;
- la figure 6 est un diagramme illustrant l'efficacité de diffraction du combineur de la figure 2 en fonction de l'angle d'illumination $\alpha$ ;
- la figure 7 est une vue de face qui représente schématiquement la sortie de l'unité de projection de la figure 1 ;
- la figure 8 est un schéma qui illustre le système de commande de l'unité de projection de la figure 1.

## DESCRIPTION DES MODES DE REALISATION PREFERES

Dans la suite de la description, des éléments identiques ou similaires seront désignés par les mêmes références.

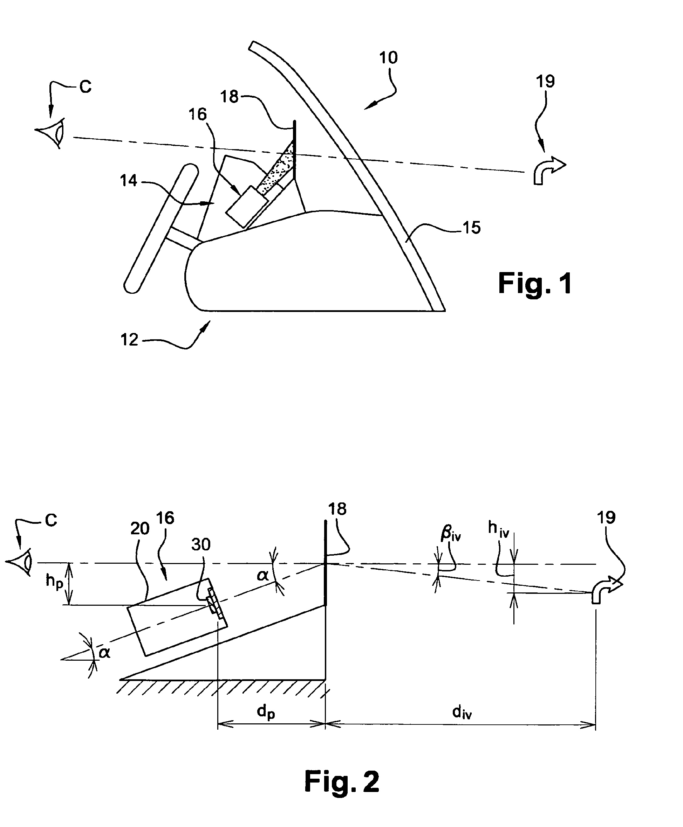

Sur la figure 1 on a représenté schématiquement l'intérieur d'un véhicule automobile 10 comportant un tableau de bord 12 et un dispositif diffractif d'affichage tête haute 14 réalisé conformément aux enseignements de l'invention. Selon le mode de réalisation représenté, le dispositif diffractif d'affichage tête haute 14 est agencé sur le tableau de bord 12, à proximité du pare-brise 15.

Le dispositif diffractif d'affichage tête haute 14 selon l'invention comporte une unité de projection 16 et un dispositif holographique 18 qui est situé dans l'axe de vision du conducteur C et qui est prévu pour afficher des informations de fonctionnement ou de conduite du véhicule sous la forme d'images virtuelles 19 positionnées à l'avant du pare-brise 15 dans le champ de vision du conducteur C.

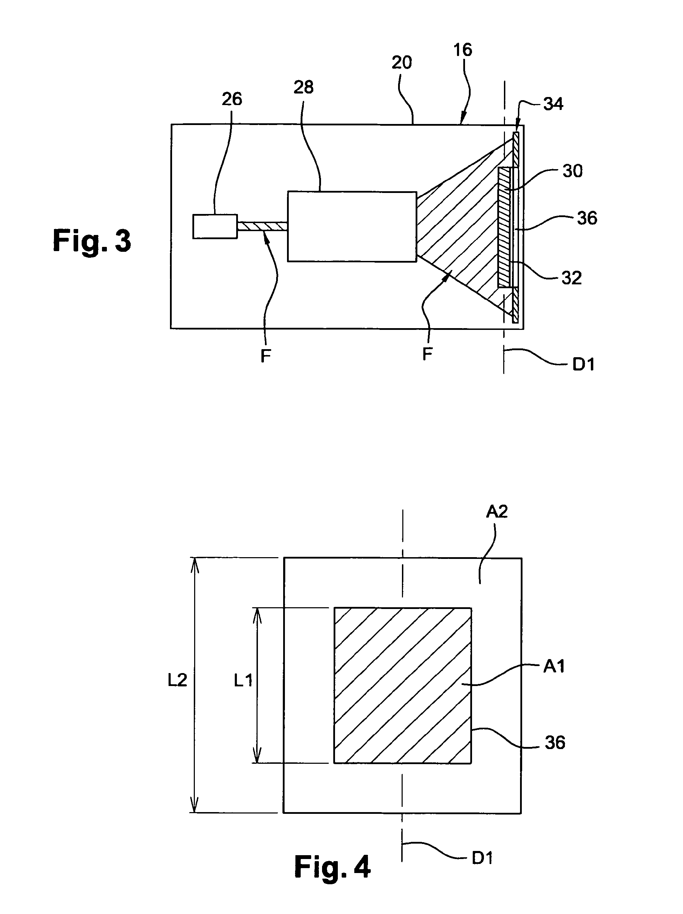

Selon l'exemple de réalisation représenté notamment sur les figures 2 et 3, l'unité de projection 16 est montée à l'intérieur d'un boîtier 20. Le boîtier 20 contient une source lumineuse 26, de préférence une diode laser émettant dans le domaine visible, qui produit un faisceau lumineux F qui est mis en forme par des éléments optiques de mise en forme 28 avant d'être diffusé vers un afficheur 30 formant l'image source. L'afficheur 30 est par exemple un écran à cristaux liquides. Les éléments optiques de mise en forme 28 visent à produire un faisceau lumineux F de forme adaptée à la forme de l'afficheur 30 et de section fonction de l'intervalle de réglage de l'image virtuelle. L'afficheur 30 est configuré pour produire des images sources représentant les informations de fonctionnement ou de conduite du véhicule. L'afficheur 30 est muni de préférence d'une couche optique de diffusion 32.

Selon le mode de réalisation représenté, le dispositif holographique 18 est un combineur diffractif fonctionnant en réflexion. Le combineur diffractif 18 est agencé dans le champ de vision du conducteur C de manière que le faisceau lumineux F provenant de l'image source se réfracte à travers le combineur diffractif 18 pour produire une image virtuelle 19 située à l'avant du véhicule Avantageusement, le combineur diffractif 18 est une pièce transparente comportant des éléments optiques diffractifs. Les éléments optiques diffractifs sont configurés pour positionner l'image virtuelle 19 holographique à une distance déterminée à l'avant du véhicule et ils sont configurés aussi pour une fonction d'agrandissement de l'image source.

Le combineur diffractif 18 est réalisé de préférence dans une matière plastique par moulage/injection ou par embossage, à partir d'une matrice elle-même réalisée par nano-lithographie par interférence laser.

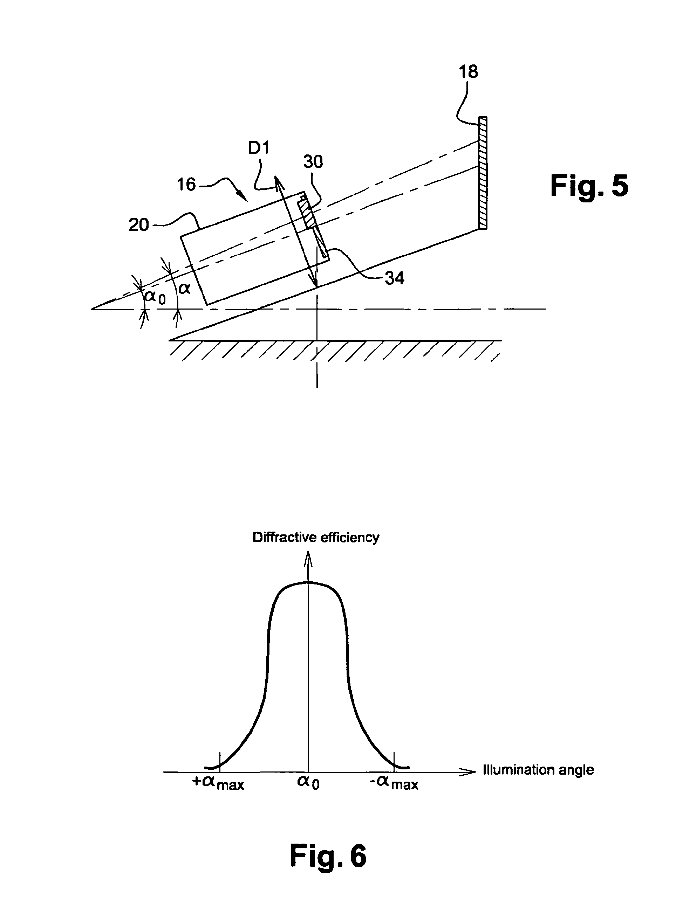

Conformément aux enseignements de l'invention, l'unité de projection 16 comporte un masque de projection 34 qui est agencé après l'afficheur 30 et qui est muni d'une fenêtre de projection 36 dont l'aire correspond globalement à l'aire d'affichage de l'afficheur 30, cette fenêtre se déplace en translation. Comme on peut le voir sur les figures 3 et 4, le faisceau lumineux F éclaire de manière uniforme, au niveau de l'afficheur 30, une aire A2 plus importante que l'aire d'affichage A1. Comme représenté sur la figure 5, l'afficheur 30 et le masque 34 sont mobiles en translation, par rapport au boîtier 20, suivant une direction D1 globalement orthogonale à l'axe X1 du faisceau lumineux de projection. La direction D1 est ici contenue dans un plan sensiblement vertical. Ainsi, l'ajustement de la position de l'image virtuelle 19 dans le champ de vision du conducteur C est obtenu par translation de l'afficheur 30 et du masque 34 avec sa fenêtre de projection 36.

Comme on peut le voir sur la figure 2, l'image virtuelle 19 dans le champ de vision du conducteur C est définie à travers le combineur diffractif 18 par un angle de vision vers le bas $\beta_{iv}$ et une distance $d_{iv}$. La loi de Bragg associe l'angle $\alpha$ d'illumination du combineur 18, correspondant à la position angulaire de l'unité de projection 16, à l'angle de vision vers le bas $\beta_{iv}$ par l'équation :

$$\alpha = Arc\sin\left(\frac{\lambda}{d} - \sin\beta_{iv}\right) \qquad\qquad (I)$$

Où :

λ : longueur d'onde de la lumière
d : pas du réseau de diffraction du combineur

Comme montré précédemment, on peut écrire les équations suivantes :

$$\alpha = Arc\tan\left(\frac{h_p}{d_p}\right) \qquad (II)$$

$$\beta_{iv} = Arc\tan\left(\frac{h_{iv}}{d_{iv}}\right) \qquad (III)$$

Donc en faisant varier la valeur de $\alpha$ on peut faire varier la valeur de l'angle de vision vers le bas $\beta_{iv}$.

La présente invention permet la variation de la position de l'image virtuelle 19 en faisant varier la position de l'ensemble afficheur/masque.

L'afficheur 30 est illuminé par le dispositif 28 de mise en forme du faisceau lumineux, diffractif ou non. Le spot d'éclairage obtenu sur la surface de l'afficheur 30 est uniforme.

La différence de hauteur L2-L1 entre l'aire d'illumination A2 et l'aire d'affichage A1 correspond à la longueur de translation nécessaire pour faire varier l'angle $\alpha$ et ainsi l'angle $\beta_{iv}$ pour permettre l'ajustement de la position de l'image virtuelle 19.

La figure 5 montre la direction D1 de translation de l'afficheur 30 dans le boîtier de l'unité de projection 16. L'afficheur 30 est translaté suivant la direction D1 alors que le boîtier 20 de l'unité de projection et le combineur 18 restent fixes. Ce mouvement de translation fait varier la valeur de l'angle $\alpha$ autour d'une valeur centrale $\alpha_0$ correspondant à une configuration initiale (position nominale de l'image virtuelle) du dispositif diffractif d'affichage 14.

Comme on l'a représenté sur la figure 6, l'intervalle de variation de l'angle $\alpha$ doit respecter la courbe d'efficacité de diffraction du combineur 18.

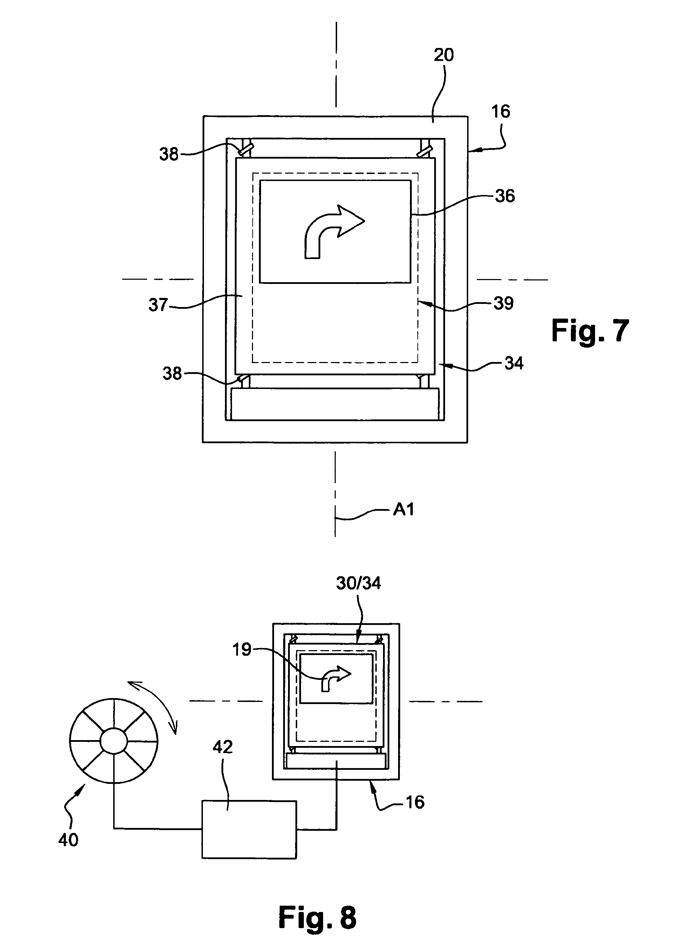

Comme représenté sur la figure 7, le corps 37 du masque 34 autour de la fenêtre 36 assure que seul l'afficheur 30 est vu par le combineur 18. Un système mécanique 38, par exemple un système à vis- écrou, assure le déplacement en translation de l'afficheur 30 autour d'une position initiale telle que représentée sur la figure 7. Le masque 34 est réalisé de préférence en matière élastique et fixé sur la face de sortie de l'afficheur 30 de manière à masquer la partie non utilisée du spot d'illumination 39.

Comme représenté sur la figure 8, le conducteur C peut ajuster la position de l'image virtuelle 19 à travers une interface homme/machine 40 et une unité électronique de commande 42 qui sont prévus pour contrôler la translation de l'afficheur 30 et du masque 34.

Avantageusement, l'invention est particulièrement adaptée à un dispositif diffractif d'affichage tête haute 14 comportant un combineur diffractif 18 obtenu par un procédé de fabrication réalisé par nano-lithographie par interférence laser. Un tel procédé comprend de préférence les étapes suivantes :

a/ dépôt d'une couche photosensible d'épaisseur uniforme sur une surface plane d'un substrat solide ;
b/ insolation sur la couche photorésistante des franges d'interférence due à l'interférence de deux faisceaux lumineux provenant d'une source laser ;
c/ application pendant une période prédéterminée d'une substance chimique de gravure sur la couche photosensible pour transformer les franges d'interférence en variation de relief de la couche photosensible et créer une matrice ;
d/ dépôt d'une couche conductrice sur la surface en relief ;
e/ application d'un procédé d'électroformage sur la couche conductrice pour obtenir un moule ; et
f/ utilisation dudit moule pour transférer la structure diffractive en relief du substrat sur un élément plastique transparent homogène constituant le combineur diffractif.

Avantageusement, l'étape b/ est réalisée à partir de deux faisceaux lumineux provenant d'une même source laser avec un angle $\theta_i$ entre les deux faisceaux égal à :

$$\theta_i = \arcsin\left(\frac{\lambda_c}{\lambda_i} \cdot \sin(\theta_p)\right)$$

L'un des faisceaux interférents est divergent et présente un front d'onde sphérique et l'autre est une onde plane, leur interférence générant un réseau diffractif à pas variable à lignes de contour de franges courbes.

En fait, la première étape du procédé consiste en la réalisation d'une matrice pour la fabrication ultérieure de moules permettant la fabrication en grandes séries. Cette matrice est constituée d'un substrat, en matériau rigide, sur lequel est déposée une couche photorésistante sensible à la longueur d'onde de la source laser utilisée, qui est toujours la même, seul l'angle entre les deux faisceaux étant modifié d'une étape à l'autre.

Classiquement, les deux faisceaux lumineux provenant de la même source sont envoyés sur la surface plane de la couche photorésistante, provoquant des franges d'interférence sur la totalité de la surface exposée. L'existence de ces interférences conduit à une insolation variable de la surface de la couche photosensible, qui est ensuite soumise à une substance chimique ayant la propriété de dissoudre la matière selon son degré d'insolation.

Il se produit par conséquent une gravure chimique, dans la mesure où les franges d'interférence se transforment en variation de relief après dissolution de certaines parties de la couche de matériau photorésistant.

L'exposition sous une pluralité d'angles (pour l'un des deux faisceau) conduit en l'occurrence à la fabrication d'un combineur à réseau multiplexé en surface, capable de restituer des couleurs distinctes non superposées, selon un faisceau incident issu d'un dispositif de projection distinguant des zones de couleurs différentes.

Ensuite, la surface en relief fait l'objet d'un dépôt d'une couche mince conductrice, permettant par la suite d'appliquer des procédés d'électroforming pour obtenir un moule. Ce dernier est enfin utilisé pour transformer la structure diffractive en relief sur un élément en plastique transparent par des moyens de production en masse tels que l'embossage ou l'injection. Il est ainsi possible d'obtenir un combineur monocouche en plastique transparent, dont les structures diffractives sont gravées sur la surface, et sont en réalité des réseaux diffractifs de surface en relief.

L'obtention par gravure chimique d'un relief sur la matrice permet de gérer l'efficacité de diffraction du combineur final en contrôlant simplement la profondeur de relief sur la surface de la matrice, notamment en jouant sur le temps de gravure chimique. If s'agit d'un autre avantage prépondérant de l'invention et de l'existence des réseaux de diffraction sur la surface d'un substrat transparent : La luminance ne dépend que de l'efficacité de diffraction, pas du matériau choisi ni de son indice de réfraction.

Le procédé de l'invention permet finalement d'obtenir un combineur en matière plastique transparente sous la forme d'une plaque d'allure plane en plastique dont l'une des surfaces comporte des structures diffractives, ce qui permet de travailler à la fois en transmission et en réflexion, avec des efficacités de diffraction différentes. La réflexion correspond par exemple à l'intégration d'un combineur dans le pare-brise.

**Revendications**

1. Dispositif diffractif d'affichage tête haute (14) comportant une unité de projection (16) qui produit un faisceau lumineux dirigé vers un combineur diffractif (18) prévu pour former une image virtuelle (19) dans le champ de vision d'un observateur, l'unité de projection (16) comportant une source lumineuse (26) qui produit un faisceau lumineux de projection dirigé vers un afficheur (30) destiné à former une image source transmise vers le combineur diffractif (18), **caractérisé en ce que** l'unité de projection (16) comporte un masque de projection (34) qui est agencé après l'afficheur (30) et qui est muni d'une fenêtre de projection (36) dont l'aire correspond globalement à l'aire d'affichage de l'afficheur (30), **en ce que** le faisceau lumineux éclaire de manière uniforme, au niveau de l'afficheur (30), une aire plus importante que l'aire d'affichage, et **en ce que** l'afficheur (30) et le masque (34) sont mobiles en translation suivant au moins une direction globalement orthogonale à l'axe du faisceau lumineux de projection, de manière que le réglage de la position de l'image virtuelle (19) dans le champ de vision de l'observateur, par exemple le conducteur d'un véhicule, soit obtenu par translation de l'afficheur (30) et du masque (34), la différence entre l'aire d'illumination et l'air d'affichage correspondant à la longueur de translation nécessaire au réglage de la position de l'image virtuelle.

2. Dispositif diffractif d'affichage tête haute (14) selon la revendication précédente, **caractérisé en ce que** le combineur diffractif (18) est réalisé sous la forme d'une plaque transparente munie d'une série d'éléments optiques diffractifs disposés en surface sur une seule couche et dans lequel l'angle de vision vers le bas ($\beta_{iv}$) de l'image virtuelle (19) est fixé par conception lors de la fabrication du combineur diffractif (18) pour un angle d'illumination ($\alpha$) déterminé.

3. Dispositif diffractif d'affichage tête haute (14) selon la revendication précédente, **caractérisé en ce que** le combineur diffractif (18) est réalisé par injection ou embossage à partir d'un moule, ledit moule étant obtenu à partir de l'enregistrement d'une structure diffractive en relief comportant des franges d'interférence elles-mêmes obtenues par insolation d'une couche photosensible au moyen de deux faisceaux lumineux interférents.

4. Dispositif diffractif d'affichage tête haute (14) selon l'une quelconque des revendications précédentes, **caractérisé en ce que** le masque (34) est fixé sur la face de sortie de l'afficheur (30).

5. Dispositif diffractif d'affichage tête haute (14) selon l'une quelconque des revendications précédentes, **caractérisé en ce que** l'afficheur (30) est un écran à cristaux liquides.

6. Dispositif diffractif d'affichage tête haute (14) selon l'une quelconque des revendications précédentes, **caractérisé en ce qu'**il comporte un dispositif de commande (42) qui contrôle la position de l'afficheur (30) et du masque (34).

**Claims**

1. Head-up diffractive display device (14) including a projection unit (16) which produces a light beam directed towards a diffractive combiner (18) designed to form a virtual image (19) in the field of view of an observer, the projection unit (16) including a light source (26) which produces a projection light beam directed towards a display (30) intended to form a source image transmitted towards the diffractive combiner (18), **characterised by** the fact that the projection unit (16) includes a projection mask (34) which is arranged after the display (30) and which is provided with a projection window (36) the area of which generally corresponds to the display area of the display (30), by the fact that the light beam uniformly illuminates, at the display (30), an area larger than the display area, and by the fact that the display (30) and the mask (34) are movable in translation in at least one direction generally at right angles to the axis of the projection light beam, so that the adjustment of the position of the virtual image (19) in the field of view of the observer, for example the driver of a vehicle, is obtained by translation of the display (30) and of the mask (34) the difference between the area of illumination and the display area corresponding to the length of translation necessary for the adjustment of the position of the virtual image.

2. Head-up diffractive display device (14) as described in the preceding claim, **characterised by** the fact that the diffractive combiner (18) is made in the form of a transparent plate provided with a series of diffractive optical elements arranged on the surface in a single layer and in which the downward angle of view ($\beta_{iv}$) of the virtual image (19) is fixed by design on manufacture of the diffractive combiner (18) for a determined angle of illumination ($\alpha$).

3. Head-up diffractive display device (14) as described in the preceding claim, **characterised by** the fact that the diffractive combiner (18)
is made by injection or embossing from a mould, the said mould being obtained from the recording of a diffractive structure in relief including interference fringes themselves obtained by exposure of a photosensitive layer by means of two interfering light beams.

4. Head-up diffractive display device (14) as described in any one of the preceding claims, **characterised by** the fact that the mask (34) is fixed on the output face of the display (30).

5. Head-up diffractive display device (14) as described in any one of the preceding claims, **characterised by** the fact that the display (30) is a liquid crystal screen.

6. Head-up diffractive display device (14) as described in any one of the preceding claims, **characterised by** the fact that it includes a control device (42) which controls the position of the display (30) and of the mask (34).

**Patentansprüche**

1. Diffraktive Heap-Up-Anzeigevorrichtung (14), enthaltend eine Projektionseinheit (16), die einen Lichtstrahl erzeugt, der auf einen diffraktiven Kombinierer (18) gelenkt wird, der dazu vorgesehen ist, ein virtuelles Bild (19) in dem Sichtfeld eines Betrachters zu erzeugen, wobei die Projektionseinheit (16) eine Lichtquelle (26) umfasst, die einen Projektionslichtstrahl erzeugt, der auf ein Display (30) gelenkt wird, das dazu bestimmt ist, ein Ursprungsbild zu erzeugen, das dem diffraktiven Kombinierer (18) übertragen wird, **dadurch gekennzeichnet, dass** die Projektionseinheit (16) eine Projektionsmaske (34) aufweist, die nach dem Display (30) angeordnet ist und mit einem Projektionsfenster (36) versehen ist, dessen Grundfläche insgesamt der Anzeigefläche des Displays (30) entspricht, dass der Lichtstrahl im Bereich des Displays (30) gleichmäßig eine größere Fläche als die Anzeigefläche ausleuchtet und dass das Display (30) und die Maske (34) in zumindest einer Richtung translatorisch verschiebbar sind, die orthogonal zur Achse des Projektionslichtstrahls verläuft, so dass die Einstellung der Position des virtuellen Bildes (19) in dem Sichtbereich des Betrachters, beispielsweise des Fahrers eines Fahrzeugs, durch Verschieben des Displays (30) und der Maske (34) erhalten wird, wobei die Differenz zwischen der Ausleuchtfläche und der Anzeigefläche der Länge der Verschiebung entspricht, die für das Einstellen der Position des virtuellen Bildes erforderlich ist.

2. Diffraktive Head-Up-Anzeigevorrichtung (14) nach dem vorangehenden Anspruch, **dadurch gekennzeichnet, dass** der diffraktive Kombinierer (18) in Form einer transparenten Platte ausgeführt ist, die mit einer Reihe von diffraktiven optischen Elementen versehen ist, die an der Oberfläche auf einer einzigen Schicht angeordnet sind, wobei der Sichtwinkel ($\beta_{iv}$) des virtuellen Bildes (19) nach unten durch die Gestaltung bei der Herstellung des diffraktiven Kombinierers (18) für einen bestimmten Ausleuchtwinkel ($\alpha$) festgelegt wird.

3. Diffraktive Head-Up-Anzeigevorrichtung (14) nach dem vorangehenden Anspruch, **dadurch gekennzeichnet, dass** der diffraktive Kombinierer (18) durch Spritzen bzw. Prägen ausgehend von einer Gießform hergestellt wird, wobei die Gießform ausgehend von der Erfassung einer reliefartigen diffraktiven Struktur mit Interferenzstreifen erhalten wird, die ihrerseits durch Belichtung einer fotosensiblen Schicht mittels zweier interferierender Lichtstrahlen erhalten werden.

4. Diffraktive Head-Up-Anzeigevorrichtung (14) nach einem der vorangehenden Ansprüche, **dadurch gekennzeichnet, dass** die Maske (34) an der Austrittsseite des Displays (30) befestigt ist.

5. Diffraktive Head-Up-Anzeigevorrichtung (14) nach einem der vorangehenden Ansprüche, **dadurch gekennzeichnet, dass** das Display (30) eine Flüssigkristallanzeige (LCD) ist.

6. Diffraktive Head-Up-Anzeigevorrichtung (14) nach einem der vorangehenden Ansprüche, **dadurch gekennzeichnet, dass** sie eine Steuereinrichtung (42) aufweist, welche die Position des Displays (30) und der Maske (34) steuert.

**Fig. 1**

**Fig. 2**

**Fig. 3**

**Fig. 4**

**Fig. 5**

Diffractive efficiency

Illumination angle

$+\alpha_{max}$     $\alpha_0$     $-\alpha_{max}$

**Fig. 6**

**Fig. 7**

**Fig. 8**

## RÉFÉRENCES CITÉES DANS LA DESCRIPTION

**Documents brevets cités dans la description**

- DE 1022006017666
- EP 0880287 A
- US 20050259034 A